# EUROPÄISCHE PATENTANMELDUNG

(11) **EP 2 453 143 A2**
(43) Veröffentlichungstag der Anmeldung: **16.05.2012**
(21) Anmeldenummer: 11009099.0
(22) Anmeldetag: 16.11.2011
(51) Int. Cl.: F16B 41/00

(54) **Abscherbares Verbindungselement**

(30) Priorität: 16.11.2010 DE 102010051386
(71) Anmelder: Kraft, André, 39218 Schönebeck (DE); Kraft, Werner, 39218 Schönebeck (DE)
(72) Erfinder: Kraft, André, 39218 Schönebeck (DE); Kraft, Werner, 39218 Schönebeck (DE)
(74) Vertreter: Schuster, Müller & Partner

(57) **Zusammenfassung**

Die Erfindung geht aus von einem abscherbaren Verbindungselement, beispielsweise einer Abreißmutter, mit einem Gewindeteil und einem von einem Werkzeug formschlüssig aufnehmbaren Kopf, der zur nicht reversiblen Befestigung von Objekten nach Aufbringen eines bestimmten Anziehmoments an einer Sollbruchstelle von dem Gewindeteil abschert.

Erfindungsgemäß ist die Sollbruchstelle (7,13) als koaxiale Ringfläche in Höhe des Kopfes (1,8) des Verbindungselements angeordnet. Der nach dem Abscheren des Kopfes (1,8) verbleibende Außendurchmesser bildet den größten Anlagedurchmesser (D2) des Befestigungselements.

## Beschreibung

### Stand der Technik

Die Erfindung geht aus von einem abscherbaren Verbindungselement, beispielsweise einer Abreißmutter, mit einem Gewindeteil und einem von einem Werkzeug formschlüssig aufnehmbaren Kopf, der zur nicht reversiblen Befestigung von Objekten nach Aufbringen eines bestimmten Anziehmoments an einer Sollbruchstelle von dem Gewindeteil abschert.

Zur Sicherung von Objekten gegen eine ungewollte Demontage ist es bekannt, diese Objekte mit Gewindebolzen und auf diesen aufschraubbaren Abreißmuttern zu befestigen. Nach dem Festziehen der Abreißmutter mittels eines an dem Kopf der Abreißmutter angreifenden Werkzeugs reißt bei fortgesetzter Krafteinwirkung mit diesem Werkzeug der Kopf ab, so dass lediglich noch der mit dem Werkzeug nicht mehr zugängliche Gewindeteil der Abreißmutter verbleibt und somit ein Lösen der Mutter mit einem derartigen Werkzeug nicht mehr möglich ist. Hierzu weisen Abreißmuttern eine Sollbruchstelle auf, die durch Materialschwächung eines Teils der Mutter oder durch Fügen zweier Teile geschaffen werden kann, wobei bei der letztgenannten Variante die Fügestelle eine geringere Festigkeit aufweist als die zu fügenden Teile (DE 88 05 472.1 U1). Allerdings besteht hier immer noch die Möglichkeit, das verbleibende Gewindeteil der Mutter, das ohne Schlüsselfläche als Befestigungselement dient, abzusägen oder mittels kraftschlüssig angesetzter Werkzeuge, z. B. einer Zange, abzudrehen. Deshalb wurde bereits vorgeschlagen, diesen Teil der Abreißmutter mit einer zusätzlichen Schutzkappe zu versehen, die den Angriff derartiger Werkzeuge zumindest erschwert (DE 88 11 493.7 U1). Die Herstellung einer derartig gesicherten Verbindung ist durch die Bereitstellung der Schutzkappe mit einem zusätzlichen Herstellungs- und Montageaufwand verbunden.

Bekannt ist ferner eine Abreißmutter, die aus einem Gewindeteil mit Innengewinde und einem profilierten Mutterkopf zum Anziehen des Gewindeteils besteht, wobei sich zwischen diesen beiden Teilen eine Sollbruchstelle befindet. Das Gewindeteil ist als sich zum Mutterkopf hin verjüngender Körper ausgebildet, dessen kleine Stirnfläche mit dem Mutterkopf, der sich zu dieser Stirnfläche hin ebenfalls verjüngen kann, verbunden ist. Dieses nach dem Abreißen des Mutterkopfes verbleibende Gewindeteil weist somit eine konische oder sphärische, glatte Umfangsfläche auf, auf der der Ansatz eines kraftschlüssigen Werkzeugs zum Lösen der Verbindung erschwert ist, insbesondere dann, wenn der Kegelwinkel größer 40° beträgt (DE 33 02 239 A1; DE 103 26 005 A1).

Der Nachteil dieser Abreißmuttern besteht darin, dass das hervorstehende Gewindeteil sowohl bei kegelstumpfförmiger als auch sphärischer Gestalt immer noch eine gewisse Angriffsfläche für kraftschlüssig angreifende Werkzeuge zum Lösen der Verbindung bietet. Außerdem birgt die nach dem Abreißen des Mutterkopfes stets nach außen vorstehende scharfe Kante eine Verletzungsgefahr in sich. Das ist bei der Anwendung der Abreißmuttern für den Zaunbau besonders dann gravierend, wenn Personen mit dem Zaun von der Innenseite her, beispielsweise durch Wege oder andere leicht begehbare Flächen in Kontakt kommen können. Im Übrigen hat die Bruchfläche der Sollbruchstelle in der Regel kein dekorativ ansprechendes Aussehen.

Ein wesentlicher Nachteil besteht ferner darin, dass der kleine Durchmesser der Sollbruchstelle lediglich ein geringes Anziehmoment ermöglicht. Für bestimmte Anwendungsfälle, die höhere Anziehmomente erfordern, ist diese Abreißmutter somit nicht geeignet. Zudem ist das Abreißmoment immer von dem Verhältnis des Außen- zum Innendurchmesser der Abreißmutter abhängig.

Schließlich ist eine Abscherschraube mit einem mit Gewinde versehenen Schaft und mit einem Kopf an dem einen Ende des Schafts bekannt, der Angriffsflächen für ein Antriebswerkzeug aufweist. Die Abscherschraube weist mehrere axial getrennte Sollbruchstellen auf, die eine Reihe von Scherebenen bilden. Der Schaft weist eine axiale Sachlochbohrung auf, von der axial beabstandete Hinterschneidungen radial nach außen in das Material des Schafts hinein abgehen (DE 102 34 475). Diese Abscherschraube kann lediglich mit ihrer dem Kopf gegenüberliegenden Stirnfläche eine Klemmfunktion ausüben. Als Befestigungsmittel für Bauteile ist sie nicht geeignet, da nach dem Abscheren des Kopfes ihr Außengewinde den größten Durchmesser bildet und somit keine Klemmfläche mehr vorhanden ist. Außerdem ist die Einbringung der radialen Hinterschneidungen mit einem erhöhten Fertigungsaufwand verbunden.

### Die Erfindung und ihre Vorteile

Das erfindungsgemäße abscherbare Verbindungselement mit den Merkmalen des Hauptanspruchs hat den Vorteil, dass die Abscherkante zum zu verschraubenden Objekt hin verschoben ist und somit lediglich noch ein verhältnismäßig flaches Stück des Gewindeteils des Verbindungselements von dem zu befestigenden Objekt absteht, dessen unbeabsichtigte Berührung im Vorbeigehen nunmehr eher unwahrscheinlich ist. Die Scherfläche selbst ist in die schmale Ringfläche des leicht überstehenden Kopfteils des Verbindungselements verlegt, so dass die in der axialen Verlängerung des Gewindeteils verbleibende direkte Sichtfläche des Kopfes in der ursprünglichen Gestalt erhalten bleibt. Dadurch ist es auch möglich, die Sichtfläche dem jeweils zu befestigenden Objekt anzupassen. Durch die Erfindung ist es erstmals möglich, abscherbare Verbindungselement mit einem gewünschten Design zu versehen, so wie es bei herkömmlichen Befestigungselementen schon immer möglich war, das auch nach dem Abscheren des Kopfes erhalten bleibt. Der nach dem Abscheren des Kopfes verbleibende Außendurchmesser im Bereich der Sollbruchstelle bildet gleichzeitig den größten Anlage- bzw. Anschlagdurchmesser des Verbindungselements an dem zu befestigenden Teil. Die Erfindung ist sowohl für Abreißmuttern als auch für Abreißschrauben anwendbar.

Vorteilhaft ist ferner, dass sich durch die Verlagerung des Abscherdurchmessers zum größten Durchmesser des abgescherten Verbindungselements hin das Anziehmoment wesentlich erhöht, ohne dass das abscherbare Verbindungselement selbst in seinen Grundabmessungen vergrößert werden muss. Der Abscherquerschnitt ist nicht wie bisher durch den kleinsten, sondern den größten Durchmesser des nach dem Abscheren verbleibenden Kopfes des Verbindungselements bestimmt. Das Abschermoment ist auf einfache Weise über die Größe der Fläche der ringförmigen Sollbruchstelle, letztendlich also über deren Höhe variierbar. Dadurch ist auch die Gestaltung des Schaftes des Gewindeteils von der Größe des Anzieh- und Abschermoments unabhängig.

Der über das zu befestigende Objekt hinausragende sehr schmale Bereich des Gewindeteils bietet kraftschlüssig angreifenden Werkzeugen keine nennenswerte Angriffsfläche, so dass an dem schmalen Rand angesetzte Werkzeuge bei der Krafteinleitung wieder abrutschen.

Vorteilhaft ist auch, dass sich durch die erfindungsgemäße Verlagerung der Sollbruchstelle in den Kopf des Verbindungselements sehr kleine Abreißschrauben bzw. -muttern herstellen lassen.

Nach einer vorteilhaften Ausgestaltung der Erfindung wird die Dicke der Sollbruchstelle durch mindestens eine axial in den Kopf des Verbindungselements hineinragende Nut, beispielsweise in Form eines umlaufenden Einstichs, gebildet. Dieser schwächt die Verbindung der umfänglichen formschlüssigen Angriffsfläche für das Festziehwerkzeug zum Kernquerschnitt des Befestigungselements. Der Einstich kann sowohl einseitig als auch mit gleichem Durchmesser von oben und unten in dem Kopf angeordnet sein. Der Vorteil eines Einstichs von oben besteht darin, dass die äußere Kante des verbleibenden Gewindeteils nicht scharfkantig ist, da die Bruchfläche erst an der tiefsten Stelle des Einstichs beginnt. Die äußere Kante kann dann sogar noch mit einer Fase oder einem Radius versehen sein, so dass in diesem Fall eine Verletzungsgefahr nahezu vollständig vermieden wird.

Nach einer anderweitigen vorteilhaften Ausgestaltung der Erfindung weist das Verbindungselement an seiner das zu befestigende Teil fixierenden Seite eine ebene Andruckfläche auf. Üblicherweise sind Muttern mit einer solchen ebenen, senkrecht zur Längsachse liegenden Andruckfläche ausgebildet, d. h. zwischen Sollbruchstelle und Gewindeteil befindet sich ein bundartiger Anschlag. Diese Ausführung wird hauptsächlich auch für Schrauben mit Schlüsselflächen anwendbar sein.

Nach einer zusätzlichen vorteilhaften Ausgestaltung der Erfindung weist das Verbindungselement an seiner das zu befestigende Teil fixierenden Seite eine konische Andruckfläche auf. Dadurch ist ein kontinuierlicher Übergang von der Sollbruchstelle zum Gewindeteil möglich. Das hat den Vorteil, dass sich das Verbindungelement nahezu vollständig wie eine Senkkopfschraube in dem zu befestigenden Teil versenken lässt. Das Befestigungselement steht dann lediglich in Höhe der Dicke der Sollbruchfläche über das zu befestigende Teil hinaus. Durch eine Ansenkung an dem zu befestigenden Teil in der Größe und Ansatztiefe des zu verwenden Befestigungswerkzeugs, beispielsweise eines Steckschlüssels, ist sogar eine vollständige Versenkung des Befestigungselements möglich.

Nach einer diesbezüglichen vorteilhaften Ausgestaltung der Erfindung ist das Gewindeteil einer Abreißmutter vollständig mit einer konischen Außenkontur versehen. Dadurch ist gewährleistet, dass unabhängig davon, wie weit die Abreißmutter über dem zu befestigenden Teil hervorsteht, dem Angriff kraftschlüssiger Werkzeuge keine geeignete Angriffsfläche zur Verfügung steht.

Nach einer besonders vorteilhaften Ausgestaltung der Erfindung besteht das Verbindungselement aus einem spritzfähigen Material, wie z. B. einem Kunststoff oder einem Druckgusswerkstoff. Dadurch, dass das Verbindungselement keine Hinterschneidungen aufweist, kann es aus diesen Werkstoffen sehr kostengünstig als Spritz- oder Druckgussteil hergestellt werden. Anstelle aufwendiger Backenwerkzeuge können deutlich einfachere Plattenwerkzeuge verwendet werden.

Weitere Vorteile und vorteilhafte Ausgestaltungen der Erfindung sind der nachfolgenden Beschreibung, der Zeichnung und den Ansprüchen entnehmbar.

### Zeichnung

Ein Ausführungsbeispiel der Erfindung ist in der Zeichnung dargestellt und im Folgenden näher beschrieben. In der Zeichnung zeigen:
- Fig. 1: eine Abreißmutter und
- Fig. 2: eine Abreißschraube.

### Beschreibung des Ausführungsbeispiels

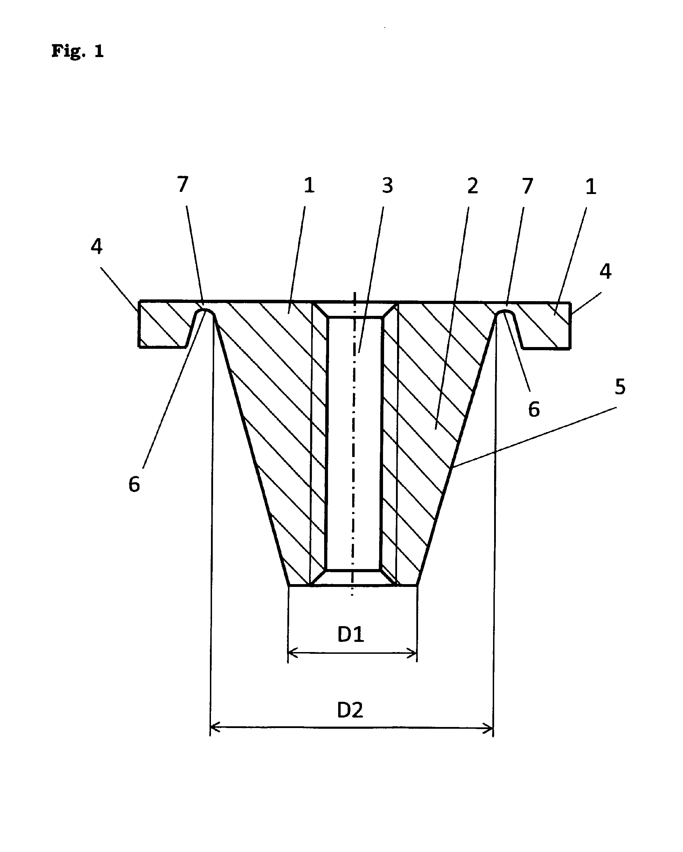

Fig. 1 zeigt eine erfindungsgemäße Abreißmutter im Schnitt. Sie besteht aus einem Kopf 1 und einem Gewindeteil 2, in dem sich eine durchgehende Gewindebohrung 3 befindet. Der Kopf 1 ist mit einer Schlüsselfläche 4 versehen. Die Mantelfläche des Gewindeteils 2 ist als Konus 5 mit einem kleinen Außendurchmesser D1 und einem großen Außendurchmesser D2 ausgebildet, wobei der Konus mit seinem großen

Außendurchmesser D2 im Kopf 1 in einer Nut 6 ausläuft. Diese Nut 6 reduziert die Dicke des Kopfes 1 im Bereich des großen Außendurchmessers D2 derart, so dass im Bereich der verbleibenden Materialdicke eine Sollbruchstelle 7 entsteht.

Die Bohrung in einem zu befestigenden Teil muss einen Innendurchmesser aufweisen, der etwas kleiner ist als der Außendurchmesser D2 der Abreißmutter.

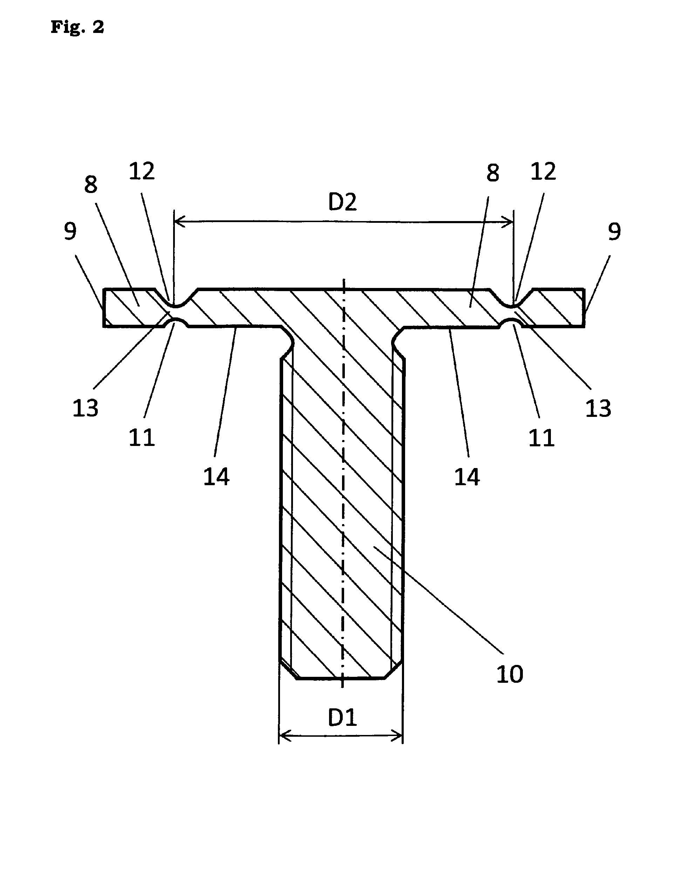

In Fig. 2 ist eine erfindungsgemäße Abreißschraube im Schnitt dargestellt, die aus einem Schraubenkopf 8 mit einer Schlüsselfläche 9 und einem Gewindebolzen 10 besteht. In den Schraubenkopf 8 ist eine untere Nut 11 und koaxial gegenüberliegend eine obere Nut 12 eingebracht. Beide Nuten 11, 12 reduzieren die Dicke des Schraubenkopfes 8 im Bereich des Durchmesser D2 derart, so dass im Bereich der verbleibenden Materialdicke eine Sollbruchstelle 13 entsteht. Die zwischen unterer Nut 11 und dem Gewindebolzen 10 verbleibende Ringfläche bildet die Anschlagfläche 14 der Abreißschraube.

Die Bohrung in einem mittels der Abreißschraube zu befestigenden Teil muss einen Innendurchmesser aufweisen, der etwas kleiner ist als der Außendurchmesser D2 des Kopfes 1 der Abreißschraube. Er muss jedoch mindestens so viel größer als der kleine Innendurchmesser D1 des Gewindebolzens 10 sein, so dass sich dieser leicht in die Bohrung hineinstecken lässt.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszahlenliste

- 1: Kopf
- 2: Gewindeteil
- 3: Gewindebohrung
- 4: Schlüsselfläche
- 5: Konus
- 6: Nut
- 7: Sollbruchstelle
- 8: Schraubenkopf
- 9: Schlüsselfläche 10 Gewindebolzen
- 11: Untere Nut
- 12: Obere Nut
- 13: Sollbruchstelle
- 14: Anlagefläche
- D1: Kleiner Außendurchmesser
- D2: Großer Außendurchmesser

## Patentansprüche

1. Abscherbares Verbindungselement, bestehend aus einem Gewindeteil (2, 10) mit Außen- oder Innengewinde (3) und einem Kopf (1, 8) mit mindestens einem Element zum formschlüssigen Angriff eines Werkzeugs zum Anziehen des Verbindungselements, wobei zwischen dem Gewindeteil (2, 10) und dem Kopf (1, 8) eine Sollbruchstelle (7, 13) ausgebildet ist,
**dadurch gekennzeichnet,**
**dass** die Sollbruchstelle (7, 13) als koaxiale Ringfläche in Höhe des Kopfes (1, 8) des Verbindungselements angeordnet ist.

2. Abscherbares Verbindungselement nach Anspruch 1,
**dadurch gekennzeichnet,**
**dass** die Dicke der Sollbruchstelle (7, 13) durch mindestens eine axial in den Kopf (1, 8) hineinragende umlaufende Nut (11, 12) gebildet wird.

3. Abscherbares Verbindungselement nach Anspruch 2,
**dadurch gekennzeichnet,**
**dass** zwei Nuten (11, 12) mit dem gleichen Durchmesser, jeweils eine von oben und eine zweite von unten, in den Kopf (1, 8) eingebracht sind.

4. Abscherbares Verbindungselement nach einem der Ansprüche 1 bis 3,
**dadurch gekennzeichnet,**
**dass** das Verbindungselement an seiner das zu befestigende Teil fixierenden Seite eine ebene Anlagefläche (14) aufweist.

5. Abscherbares Verbindungselement nach einem der Ansprüche 1 bis 3,
**dadurch gekennzeichnet,**
**dass** das Verbindungselement an seiner das zu befestigende Teil fixierenden Seite eine konische Andruckfläche (5) aufweist.

6. Abscherbares Verbindungselement nach einem der Ansprüche 1 bis 3 oder 5,
**dadurch gekennzeichnet,**
**dass** das Gewindeteil (2) vollständig mit einer konischen Außenkontur (5) versehen ist.

7. Abscherbares Verbindungselement nach einem der Ansprüche 1 bis 6,
**dadurch gekennzeichnet,**
**dass** das Verbindungselement aus einem spritzfähigen Material besteht.
